# EUROPEAN PATENT SPECIFICATION

(11) **EP 2 480 838 B1**
(45) Date of publication and mention of the grant of the patent: **02.04.2014**
(21) Application number: 10776187.6
(22) Date of filing: 03.09.2010
(51) Int. Cl.: F24J 2/12, F24J 2/46

(54) **PARABOLIC CONCENTRATOR WITH PIVOTING PARABOLICALLY CURVED SECTORS**
PARABOLISCHER KONZENTRATOR MIT DREHBAREN; PARABOLISCH GEKRÜMMTEN ABSCHNITTEN
CONCENTRATEUR PARABOLIQUE AYANT DES SECTEURS ROTATIFS COURBÉS DE MANIÈRE PARABOLIQUE

(30) Priority: 09.09.2009 IT RM20090457
(43) Date of publication of application: 01.08.2012
(73) Proprietor: Farina, Giuseppe, 00144 Roma (IT)
(72) Inventor: Farina, Giuseppe, 00144 Roma (IT)
(86) International application number: PCT/IT2010/000384
(87) International publication number: WO 2011/030364

(56) References cited:
- EP-A1- 0 163 801
- JP-A- 2001 291 890

## Description

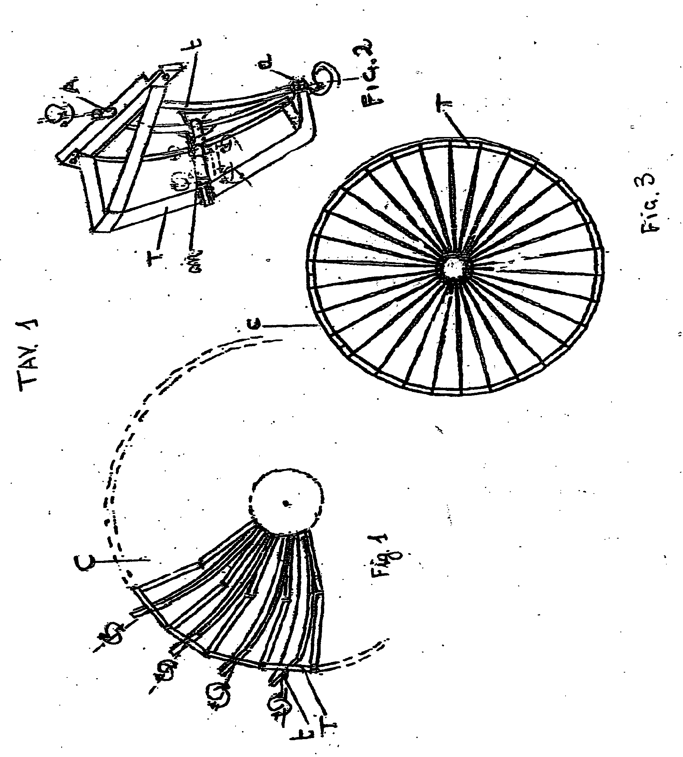

The parabolic concentrator with parabolically curved rotating sectors (C) Fig. 1, object of the invention, allows to realize concentrators of great dimensions without any reduction of steadiness of the same in the presence of strong wind, and, consequently, the carrying and the movement structures shall be lighter and more economic.

Patent no. EP0163801 discloses a parabolic concentrator according to the preamble of claim 1.

The above said concentrators can have a wide application field, especially in those sectors where are needed high temperatures that start from 1000° K to 1300°, for the production of electric power, hydrogen, drinking water and thermoelectric power, adopting respectively: hybrid Stirling motor, fuel cells, steam reformer, desalinators and co-generation systems. Other features are the constraction and assembly simplicity of each sector (t); carrying easiness because the concentrator is reducible in sectors.

Those concentrators are at risk in case of strong winds.

It is therefore the object of the invention to avoid damages on the concentrators in the cast of strong winds.

This is achieved by a parabolic concentrator comprising the technical features of claim 1.

A further embodiment is described in claim 2

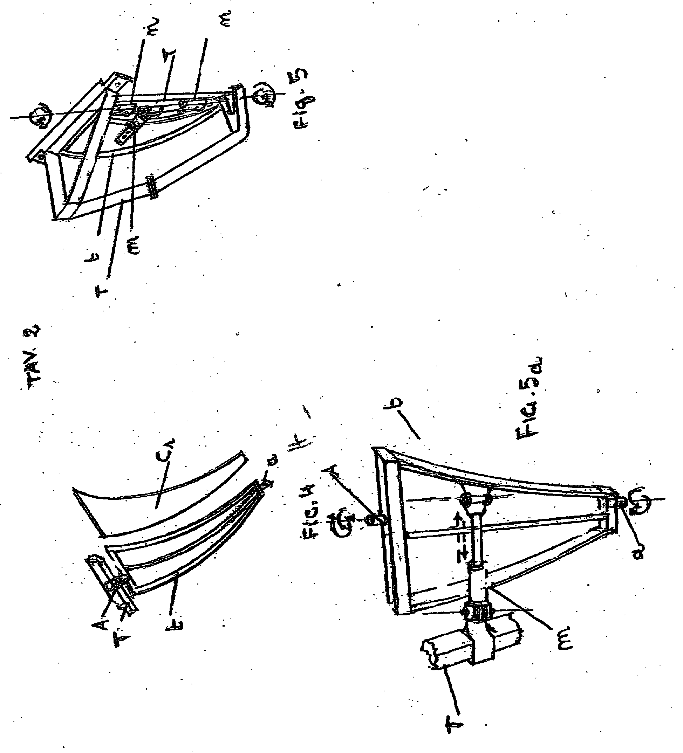

The invention is described referring to the designs enclosed, Figures 1-5a that explain a particular realization of the parabolic concentrator (C) whose components are:
a) parabolically curved rotating sectors (t) (see Figures 1, 2, 4 and 5) on which are fixed reflecting material panels of the same shape and dimension (CI) Fig. 4 Table 2;
b) carrying structure (T) supporting the rotating sectors (t) (see Figures 1, 2, 3, 5 and 5a);
c) tie rod system (m) (hydraulic and spring...) Figures 2-5 and 5a whose ends are linked: on one side to the paraboloid's carrying structure (T); on the other side to the rotating sector (t).

The systems (m) in the absence of strong wind provide to the rotating sectors (t) the initial configuration of the parabolic concentrator (C) for the concentration of the solar rays in the focus zone (F) of the same.

In the presence of strong wind, the sectors (t) carry out a rotation around the axes (A, a) fixed on the same ones in an eccentric mode to make the wind flow away so as to reduce the impact with the plant's structure; when the strong wind ceases the tie rod systems (m) force the rotating sectors (t) to return to the initial position, resetting the configuration of the parabolic concentrator (C).

As an alternative to the adoption of the axes (A, a) for the opening of the sectors (t) can be adopted hinges (n) fixed laterally to the same ones (see Fig. 5), so as in the presence of strong wind, the said sectors (t) can rotate in both ways around the axes of the same hinges (n) by means of a different placing of the tie rod (m) (hydraulic or helical spring...).

In the current state of the art of technology, no description of parabolic concentrators with characteristics similar to those described in this patent application can be found.

## Claims

1. Parabolic concentrator (C) formed by a paraboloid divided in sectors (t) parabolically curved and covered by reflecting material (C1) for the captation and the reflection of the solar rays, comprising:
- a carrying structure (T);
- the parabolically curved sectors (t), on which are fixed reflecting material panels (C1), with the same parabolic shape,
**characterized in that**
- the sectors (t) are rotatably linked to the carrying structure (T) so that they are rotating sectors (t) which can rotate around axes (A, a), whereby the axes (A, a) of each sector (t) are arranged in an eccentric way and parallel to the other axes (a, A) of the same sector..
- tie rod system (m), whose ends are linked steadily on one side to the carrying structure (T) and on the other one to the rotating sector (t);
- wherein the tie rod systems (m), in the absence of strong wind, is suitable to provide to the systems (t) the initial configuration of the parabolic concentrator (C) for the, concentration of the solar rays in the focus zone of the same, and
- wherein the tie rod systems (m), in the presence of strong wind, is suitable to carry out a rotation of the rotating sectors (t) around the axes (A, a) to make the wind flow away so as to reduce the impact on the carrying structure (T); and
- wherein the tie rod systems (m), when the strong wind ceases, is suitable to force the rotating sectors (t) to return to the starting position.

2. Parabolic concentrator (C) as claimed in claim 1, **characterized in that** the rotating sectors (t) are placed on the supporting structure (T) by means of hinges (n), to allow rotation of the rotating sectors (t) around the axes (A, a), such hinges (n) are connected on one side to the supporting carrying structure (T) and on the other side to the rotating sectors (t), so that the rotating sectors (t) can rotate in both directions around the axes (A, a) that pass through the hinges (n)

## Patentansprüche

1. Parabolischer Konzentrator (C), gebildet aus einem Paraboloid, das in parabolisch gekrümmte Abschnitte (t) unterteilt ist, welche mit reflektierendem Material (C1) zum Einfangen und Reflektieren von Sonnenstrahlung verkleidet sind. Dieser umfasst:
- eine Tragkonstruktion (T);
- drehbare, parabolisch gekrümmte Abschnitte (t), an denen die Paneele aus reflektierendem Material (C1) mit der gleichen parabolischen Form befestigt werden und **dadurch gekennzeichnet, dass**:
- die Abschnitte (t) mit der Tragkonstruktion (T) über die Achsen (A, a) verbunden werden, um die sie sich drehen können; die Achsen (A, a) an den Abschnitten (t) befestigt sind, die exzentrisch und parallel zu den Symmetrieachsen (a, A) der Abschnitte angeordnet sind ...
- die Zugstange (m), deren Enden fest angebracht sind: einerseits an der Tragkonstruktion (T) und andererseits an dem drehbaren Abschnitt (t);
- wobei die Zugsysteme (m), wenn kein starker Wind weht, die drehbaren Abschnitte (t) in der Ausgangskonfiguration des parabolischen Konzentrators (C) zur Bündelung der Sonnenstrahlung in der Fokuszone halten, und
- wobei die Zugsysteme (m) bei starkem Wind eine Rotation der drehbaren Abschnitte (t) um die Achsen (A, a) bewirken, um den Wind ausströmen zu lassen und so die Windeinwirkung auf die Tragkonstruktion (T) zu reduzieren, und
- wobei die Zugsysteme (m) nach Abklingen des starken Windes die Rückkehr der drehbaren Abschnitte (t) in die Ausgangsposition bewirken.

2. Parabolischer Konzentrator (C) nach Anspruch 1, **dadurch gekennzeichnet, dass** die drehbaren Abschnitte (t) an der Tragkonstruktion (T) mithilfe von Scharnieren (n) befestigt sind, um die Rotation der drehbaren Abschnitte (t) um die Achsen (a, a) der Scharniere (n) zu ermöglichen, welche fest verbunden sind: einerseits mit der Tragkonstruktion (T) und andererseits mit den drehbaren Abschnitten (t), sodass die drehbaren Abschnitte (t) in beiden Richtungen um die Achsen (A, a) der Scharniere (n) rotieren können.

## Revendications

1. concentrateur parabolique (C) composè par un paraboloïde divisé en secteurs (t) incurvée de façon parabolique et couvert par un matériau (C1) pour la captation et la réflexion des rayons solaires, *comprenant :*
- Une structure portant (T);
- Secteurs parabolique courbes (t), sur lesquels sont fixés des panneaux réflecteurs de matériels (C1), avec la même forme parabolique, **caractérisé en ce que**;
- Les secteurs (t) sont en rotation lié à la structure porteuse (T) de sorte qu'ils soient les secteurs (t) qui peuvent tourner autour d' axes (A, a), de sorte que les axes (A, a) de chaque secteur (t tournent) sont disposés de manière excentrique et parallèle aux autres axes (a, a) d'un même secteur.
- Système d'attache de tige (m), dont les extrémités sont liées de façon constante sur un côté de la structure porteuse (T) et sur l'autre dans le secteur de rotation (t);
- Dont les systèmes de tiges de traction (m), en absence de vent fort, sont adaptés pour fournir aux systèmes (t) de la configuration initiale du concentrateur parabolique (C) pour la concentration des rayons solaires dans la zone de mise au point des même, et dans laquelle les systèmes de tirants (m), en présence de vent fort, sont adaptés pour effectuer une rotation des secteurs de rotation (t) autour des axes (A , a) pour faire le vent s'écouler à réduire la impact sur la structure porteuse (T), et dans lequel les systèmes d'attache de tige (m), lorsque le vent cesse , est adaptée pour forcer les secteurs de rotation (t) pour revenir à la position de départ.

2. concentrateur parabolique (C) selon la revendication no. 1, **caractérisé *en ce que*** les secteurs de rotation (t) sont placés sur la structure porteuse (T) au moyen de charnières (n), pour permettre la rotation des secteurs de rotation (t) autour de les axes (a, a), ces charnières (n) sont reliés d'une part à la structure porteuse de support (T) et de l'autre côté aux secteurs de rotation (t), de sorte que les secteurs de rotation (t) peuvent tourner dans les deux sens autour des axes (A, a) qui passent à travers les charnières (n)
